(19) Europäisches Patentamt
European Patent Office
Office européen des brevets

(11) EP 3 837 290 B1

(12) **EUROPEAN PATENT SPECIFICATION**

(45) Date of publication and mention of the grant of the patent:
**10.05.2023 Bulletin 2023/19**

(21) Application number: **19742384.1**

(22) Date of filing: **25.07.2019**

(51) International Patent Classification (IPC):
***C08F 210/06*** *(2006.01)* ***C08F 210/16*** *(2006.01)*
***C08F 4/657*** *(2006.01)*

(52) Cooperative Patent Classification (CPC):
(C-Sets available)
**C08F 210/16; C08F 210/06** (Cont.)

(86) International application number:
**PCT/EP2019/070086**

(87) International publication number:
**WO 2020/035283 (20.02.2020 Gazette 2020/08)**

(54) **COMPONENTS AND CATALYSTS FOR THE POLYMERIZATION OF OLEFINS**
KOMPONENTEN UND KATALYSATOREN ZUR POLYMERISIERUNG VON OLEFINEN
COMPOSANTS ET CATALYSEURS POUR LA POLYMÉRISATION DES OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.08.2018 EP 18188840**

(43) Date of publication of application:
**23.06.2021 Bulletin 2021/25**

(73) Proprietor: **Basell Poliolefine Italia S.r.l.**
**20121 Milano (IT)**

(72) Inventors:
- **GUIDOTTI, Simona**
  **44122 Ferrara (IT)**
- **LIGUORI, Dario**
  **44122 Ferrara (IT)**
- **MORINI, Giampiero**
  **44122 Ferrara (IT)**
- **VITALE, Gianni**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-98/44009** **WO-A1-2017/042058**
**US-A- 4 220 554** **US-A- 5 007 357**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 837 290 B1

(52) Cooperative Patent Classification (CPC): (Cont.)

C-Sets
**C08F 210/16, C08F 4/6465;**
**C08F 210/16, C08F 4/651;**
**C08F 210/16, C08F 4/6545;**
**C08F 210/16, C08F 4/6574;**
C08F 210/06, C08F 210/02, C08F 2500/12;
C08F 210/16, C08F 210/06, C08F 2500/12

## Description

FIELD OF THE INVENTION

The present disclosure relates to a catalyst component for the polymerization of olefins, to the catalyst obtained therefrom and to the use of said catalysts in the polymerization of olefins $CH_2$=CHR in which R is hydrogen or a hydrocarbyl radical with 1-12 carbon atoms. In particular, the present disclosure relates to catalyst components, for the stereospecific polymerization of olefins, comprising Ti, Bi, Mg, halogen and an electron donor compound obtained by a specific process.

BACKGROUND OF THE INVENTION

Ziegler-Natta (ZN) catalyst useful for the polymerization of polyolefins comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), and, optionally, a compound of group 13 of the Periodic Table (IUPAC) and/or an internal donor compound. ZN catalyst may also comprise further catalyst component(s), such as a cocatalyst and/or an external donor.

There are a variety of methods for preparing ZN catalyst. In one such method, the transition metal compound is contacted with a carrier material which is based on a magnesium compound, such as $MgCl_2$. This type of carrier material can also be formed in various ways. EP-A-713886 describes the formation of $MgCl_2$ adduct with an alcohol which is then emulsified and finally the resultant mixture is quenched to cause the solidification of the droplets. Alternatively, EP-A-856013 discloses the formation of a solid Mg-based carrier, wherein the Mg-component containing phase is dispersed to a continuous phase and the dispersed Mg-phase is solidified by adding the two-phase mixture to a liquid hydrocarbon. In each of these cases, the formed solid carrier particles are treated with a transition metal compound and optionally treated with other compounds in order to generate the active solid catalyst component.

Accordingly, in this type of preparations, the morphology of the carrier, which is generated before the contact with the transition metal, is one of the defining factors for the morphology of the final catalyst. This also means that the distribution of the catalytically active compounds on the support material is highly dependent on the support particle structure, like compactness of the support particles, porosity and pore size distribution. As a result this may lead to non-uniform distribution of the active component(s) within the catalyst particle.

In order to obviate to these problems, ZN catalysts can also be prepared by techniques in which a solution comprising both Mg and Ti, and, optionally an internal donor compound, is subjected to a controlled process producing solidified catalyst particles already containing the transition metal compound. Process of this type is described for example in US5,077,357.

These solid particles can be additionally treated with a transition metal halide, optionally in the presence of an internal donor in order to prepare the final catalyst. Although the so obtained catalyst is endowed with a good homogeneity, certain features are to be improved. For example, the polymerization activity when preparing random propylene/ethylene (and/or alpha olefins) copolymers is relatively low, and it would be beneficial to improve the polymerization activity.

SUMMARY OF THE INVENTION

The applicant has surprisingly found a solid catalyst component satisfying the needs which comprises titanium, bismuth, magnesium, halogen, an electron donor compound and is obtained by a process comprising the following steps:

(a) dissolving a $Mg(OR)_2$ compound where R groups, equal or different to each other, are $C_1$-$C_{15}$ hydrocarbon groups optionally containing a heteroatom selected from O, N and halogen, in an organic liquid medium in order to have a liquid mixture;

(b) contacting the above mixture (a) with $TiCl_4$ obtaining a liquid mixture not containing solid phase,

(c) subjecting the liquid mixture (b) to a temperature of at least 50°C thereby forming solid catalyst particles, said process being characterized by the fact that (i) a Bi compound and (ii) a bidentate electron donor compound is present in one or more of steps (a) to (c) and/or contacted with the solid catalyst particles obtained from (c).

According to the present disclosure, the $Mg(OR)_2$ compound is preferably a magnesium alkoxide in which R is a simple $C_1$-$C_{15}$ alkyl group or has the structure of an ether group -ROR where R is a $C_1$-$C_{15}$ alkyl group as well.

Preferred Mg alkoxides are Mg dimethoxides, diethoxides, di propoxides, dibutoxides, dipentoxides diethylhexyloxides, dioctyloxides. However, also mixed alkoxides such as Mg ethoxide-butoxide, Mg butoxide-octyloxide, Mg ethoxide-ethylhexyloxide are preferred.

Many alkoxides, such as Mg diethoxide, are commercially available and can be used as such. However, they can also be prepared in situ by reacting Mg dialkyl compounds with the appropriate alcohol or hydroxy ether.

Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, mixed dialkyl compounds in which one is a butyl group and the other is an ethyl or octyl group, i.e. the dialkyl magnesium compound is butyl octyl magnesium or ethyl butyl magnesium are preferred.

Preferred alcohols include ethanol, propanol, butanol, hexanol, 2-ethyl-1-butanol, 4-methyl-2-pentanol, 1- heptanol, 2-heptanol, 4-heptanol, 2,4-dimethyl-3-pentanol, 1-octanol, 2-octanol, 2-ethyl-1 - hexanol, 1-nonanol, 5-nonanol, diisobutyl carbinol, 1-decanol and 2,7-dimethyl-2-octanol. The most preferred monohydric alcohol is 2-ethyl-1 -hexanol.

Preferred hydroxy ethers are glycol monoethers, in particular $C_2$-$C_4$ glycol monoethers, such as ethylene or propylene glycol monoethers wherein the ether moieties comprise from 2 to 15 carbon atoms, preferably from 2 to 12 carbon atoms and more preferably 2 to 8 carbon atoms. Preferred monoethers are $C_2$ to $C_4$ glycol monoethers and derivatives thereof. Illustrative and preferred examples are ethylene glycol butyl ether, ethylene glycol hexyl ether, ethylene glycol 2-ethylhexyl ether, propylene glycol n-butyl ether, propylene glycol methyl ether, propylene glycol ethyl ether, propylene glycol n-hexyl ether, propylene glycol 2-ethylhexyl ether, with ethylene glycol hexyl ether, 1,3-propylene glycol ethyl ether and 1,3-propylene glycol n-butyl ether, being particularly preferred. The most preferred hydroxy ethers are 1,3-propylene glycol ethyl ether and 1,3 -propylene glycol n-butyl ether.

The organic liquid medium is preferably a hydrocarbon diluent such as isopentane, isooctane, cyclohexane or toluene or a halohydrocarbon such as methylene chloride or chlorobenzene. Isooctane and toluene are preferred hydrocarbon diluent and chlorobenzene is a preferred halohydrocarbon diluent.

In step (b) the Mg alkoxide is contacted with $TiCl_4$ under conditions such that a liquid mixture is generated, i.e, a mixture which does not include a solid phase but only one or more liquid phases.

Due to the fact that $TiCl_4$ is reactive towards Mg alkoxides, the reaction should be carried out in the presence of reactants and conditions such as to prevent the formation of a precipitate.

Several different main procedures are available for carrying out step (b) and (c).

According to first preferred route, a liquid mixture (b) is prepared by reacting the Mg alkoxide with $TiCl_4$ and with a titanium alkoxide, a phenolic compound and an alkanol in an inert liquid diluent that can be the same as, or different from, the organic liquid medium used in step (a).

In this procedure, it is preferred that the alkoxy groups of the Mg alkoxide, alkanol and those of the Ti alkoxides, independently have up to 4 carbon atoms inclusive. Preferred alkoxide moieties are methoxide, propoxide, isopropoxide and butoxide; the preferred alkoxide moieties are ethoxide.

The phenolic compound used in this step (b) is selected from phenol or activating group-substituted phenol. By the term "activating group" is meant an aromatic ring carbon atom substituent free from active hydrogens which is ortho-para directing for conventional aromatic ring substitution and which is generally but not invariably electron donating. Illustrative of such groups are alkyl of up to 5 carbon atoms inclusive, e.g., methyl, ethyl, isopropyl or n-butyl; alkoxy of up to 5 carbon atoms, e.g., methoxy, ethoxy or i-propoxy; halo, particularly chloro or bromo; and dialkylamino wherein each alkyl independently has up to 5 carbon atoms inclusive such as dimethylamino, diethylamino and methylpropylamino. Illustrative of phenolic compounds which are useful in the production of the procatalyst precursor are phenol, o-cresol, p-cresol, 3-methoxyphenol, 4-dimethylaminophenol, 2,6-di-tert-butyl-4-methylphenol and p-chlorophenol. Of such phenolic compounds the use of alkyl-substituted phenol is preferred and particularly preferred is the use of o-cresol.

In a preferred embodiment of this procedure, the reaction step (b) is illustrated by the following partial general equation which employs the preferred alkoxide and halide moieties,

$$3Mg(OEt)_2 + x\ Ti(OEt)_4 + y\ TiCl_4 + z\ \text{o-cresol} + n\ EtOH.$$

wherein y is more than about 0.1 but less than about 0.8, preferably more than 0.3 but less than 0.5, (x+y) is more than about 0.2 but less than about 3, preferably more than about 0.5 but less than about 2, z is more than about 0.05 but less than about 3, preferably more than about 0.1 but less than about 2, and n is more than about 0.5 but less than about 9, preferably more than about 2 but less than about 5.

The initial interaction of the reactants in the reaction diluent takes place in a non-gaseous state at a moderate reaction temperature. Suitable reaction temperatures are from about 30°C to 120°C, preferably from 35°C to 90°C.

This initial heating, carried out under stirring, results in the formation of liquid mixture having only a liquid phase, in the preferred case a clear solution.

In step (c), according to this preferred procedure, the solution is heated to a higher temperature to remove alkanol, which is ethanol in the preferred modification. The temperature of this second heating will depend in part on the boiling point of any possible azeotrope containing alkanol which may be formed. Typical heating (azeotroping) temperatures are from about 70°C to 120°C, preferably from about 85°C. to about 110°C. The removal of the alkanol results in the formation of the form of solid, opaque, spheroidal particles.

The so obtained spheroidal particles are then contacted in a further step (d) with a bidentate electron donor and, preferably, a tetravalent titanium halide in the optional presence of a halohydrocarbon.

The tetravalent titanium halide is preferably a titanium tetrahalide such as titanium tetrachloride or titanium tetrabromide. A titanium tetrahalide particularly preferred is titanium tetrachloride.

The halohydrocarbon is preferably a halohydrocarbon of up to 12 carbon atoms inclusive, preferably up to 9 carbon atoms inclusive, which contains at least one halogen atom and in the case of aliphatic halohydrocarbons contains at least two halogen atoms. Exemplary aliphatic halohydrocarbons include methylene chloride, methylene bromide, chloroform, carbon tetrachloride, 1,2-dibromoethane, 1,1,2-trichloroethane, trichlorocyclohexane, dichlorofluoromethane and tetrachlorooctane. Aromatic halohydrocarbons which are suitably employed are chlorobenzene, bromobenzene, dichlorobenzene and chlorotoluene. Of the aliphatic halohydrocarbons, carbon tetrachloride and 1,1,2-trichloroethane are preferred but particularly preferred is the aromatic halohydrocarbon chlorobenzene.

The bidentate electron donors which can be used as internal donors in the preparation of the solid catalyst component can be selected from ethers, amines, silanes, carbamates, ketones, esters of aliphatic acids, alkyl and aryl esters of optionally substituted aromatic polycarboxylic acids, diol derivatives containing ester, carbamates, carbonates, amides groups or mixtures thereof.

When the internal donor is selected from alkyl and aryl esters of optionally substituted aromatic polycarboxylic acids preferred donors are the esters of phthalic acids. Preferred esters of aliphatic acids are selected from malonic, glutaric, maleic and succinic acids. Specific examples of such esters are n-butylphthalate, di-isobutylphthalate, and di-n-octylphthalate.

Preferably, the ethers can be selected from the 1,3 diethers of the formula (I):

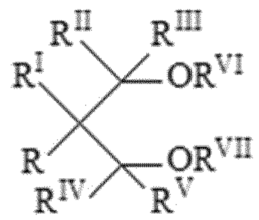

(I)

wherein R, $R^I$, $R^{II}$, $R^{III}$, $R^{IV}$ and $R^V$ are equal to or different from each other, and are hydrogen or hydrocarbon radicals having from 1 to 18 carbon atoms; and $R^{VI}$ and $R^{VII}$ are equal to or different from each other, and have the same meaning of R-$R^V$ except that $R^{VI}$ and $R^{VII}$ cannot be hydrogen; one or more of the R-$R^{VII}$ groups can be linked to form a cycle. The 1,3-diethers in which $R^{VI}$ and $R^{VII}$ are selected from $C_1$-$C_4$ alkyl radicals are particularly preferred.

It is also possible to use mixtures of the above-mentioned donors. Specific mixtures are those constituted by esters of succinic acids or glutaric acids and 1,3 diethers as disclosed in WO2011/061134. Moreover, also the diesters disclosed in WO2010/078494 and US 7,388,061 can be used. Among this class, particularly preferred are the 2,4-pentanediol dibenzoate derivatives and 3-methyl-5-t-butyl catechol dibenzoates.

It is easily derivable for the ones skilled in the art that the above-mentioned compounds can be used either in form of pure isomers or in the form of mixtures of enantiomers, or mixture of regioisomers and enantiomers.

In general, the amount of bidentate electron donor (ID) compound used in the catalyst preparation is such that the Mg/(ID) molar ratio ranges from 1 to 50 preferably from 2 to 25. In general, the amount of electron donor compound in the final solid catalyst component may range from 0.5 to 40 wt% by weight preferably in the range from 1 to 35 wt% with respect to the total weight of the solid catalyst component.

The precise manner in which the solid particles obtained in (c) and the electron donor are contacted is not critical. Preferably, the contact occurs in the presence of a titanium tetrahalide and the halohydrocarbon.

In a preferred procedure, the tetravalent titanium halide is added to a mixture of the electron donor and solid particles coming from step (c). It is preferred mixing the electron donor with the tetravalent titanium halide and halohydrocarbon and the resulting mixture is used to contact the solid particles. Other procedures are also suitable but less preferred.

The solid product which results is typically washed at least once with the tetravalent titanium halide and the halohydrocarbon, taken together or employed separately. It can be useful to include an acid chloride, e.g., benzoyl chloride or phthaloyl chloride in at least one wash to further facilitate the replacement of at least a portion of the alkoxide moieties in the catalyst component with halide moieties. This replacement, often termed a halogenation, is well known in the art. The solid catalyst component which results is then typically washed with a light hydrocarbon such as isooctane to remove soluble titanium compounds.

In a preferred modification of the procedure, the mixture of solid particles coming from (c), tetravalent titanium halide, electron donor and halohydrocarbon is maintained at an elevated temperature, for example, a temperature of up to about 150°C. Preferably, the materials are contacted initially at or about ambient temperature and then heated. Sufficient tetravalent titanium halide is provided to convert at least a portion and preferably at least a substantial portion of the alkoxide moieties of the solid catalyst component to halide groups. This replacement is conducted in one or more

contacting operations, each of which is conducted over a period of time ranging from a few minutes to a few hours and it is preferred to have halohydrocarbon present during each contacting. Sufficient electron donor is provided so that the molar ratio of electron donor to the magnesium present in the solid procatalyst is from about 0.01:1 to about 1:1, preferably from about 0.05:1 to about 05:1. The final washing with light hydrocarbon produces a final solid catalyst component which is of granular morphology. Alternatively, the procatalyst is used as obtained from the hydrocarbon washing without the need of drying.

The Bi compound used in the catalyst preparation process preferably does not have Bi-carbon bonds. In particular, the Bi compounds can be selected from Bi halides, Bi carbonate, Bi carboxylates, Bi acetate, Bi nitrate, Bi oxide, Bi sulphate, Bi sulfide. Compounds in which Bi has the valence +3 are preferred. Among Bi halides, preferred are Bi trichloride and Bi tribromide. The most preferred Bi compounds are $BiCl_3$ and Bi decanoate. The term decanoate includes normal linear decanoate or ay of its branched isomers.

The amount of bismuth compound used in the process ranges from 0.005 to 0.2, preferably from 0.010 to 0.1 and more preferably from 0.01 to 0.04 mole per mole of Mg.

Although the Bi compound can be introduced in any of the steps (a)-(d), there are preferred ways of introduction. In a first preferred way, the Bi compound is added in step (a) and dissolved together with magnesium alkoxide in the solvent system.

In another preferred embodiment, the Bi compound is added in step (b) preferably dissolved or suspended in the liquid medium.

In a still further preferred embodiment, the Bi compound is added in step (d) preferably dissolved or suspended in a liquid medium constituted by, or comprising, the Ti halide compound.

The Bi compound can be introduced in more than one step (a)-(d) in order to further enhance the Bi final amount. Preferably however, it is used in only one of the steps (a)-(d).

According to a second preferred route, in step (b) the Mg alkoxide solution is mixed with $TiCl_4$ at a temperature of about -20°C to about 30°C and in the presence of a surfactant. In the successive step (c), precipitation of the solid catalyst components is obtained by slowly raising the temperature to at least 50 °C, preferably in the temperature range of 50 to 110 °C, more preferably in the range of 70 to 100°C, most preferably in the range of 85 to 95°C, whereby the rate of temperature increase is in the range from 0.1°C to 30°C per minute, preferably 0.5 to 10°C per minute. In this case, it is especially appreciated that a surfactant is added to the Mg alkoxide solution before step (b).

General examples of surfactants include polymer surfactants, such as poly(alkyl methacrylate) and poly(alkyl acrylate), and the like. A polyalkyl methacrylate is a polymer that may contain one or more methacrylate monomers, such as at least two different methacrylate monomers, at least three different methacrylate monomers, etc. Moreover, the acrylate and methacrylate polymers may contain monomers other than acrylate and methacrylate monomers, so long as the polymer surfactant contains at least about 40% by weight acrylate and methacrylate monomers.

Examples of surfactants that are commercially available include those under the trade marks VISCOPLEX® available from RohMax Additives, GmbH, especially those having product designations 1-254, 1-256 and those under the trade designations CARBOPOL® and PEMULEN® available from Noveon/Lubrizol.

It is possible, but not necessary, to add some precipitating agent into the system. This latter may influence morphology of the particles formed during the precipitation step.

In this route, the bidentate electron donor is preferably added to the Mg alkoxide solution prepared in step (a). The electron donor can also be introduced in form of a precursor, which is then transformed in situ to the electron donor by reaction with a corresponding Mg-alkoxide. Additional donors can be added, if so desired into the catalyst preparation in any of steps (a) to (b).

Preferably the reaction medium used as solvent in step (a) is also used in step (b) and is preferably selected from liquid hydrocarbons, preferably from aromatic or a mixture of aromatic and aliphatic hydrocarbons, the latter one containing 5-20 carbon atoms, preferably 5-16 carbon atoms more preferably 5-12 carbon atoms and most preferably 5 to 9 carbon atoms. Preferably, the aromatic hydrocarbon is selected from substituted and unsubstituted benzenes, preferably from alkylated benzenes, even more preferably from toluene and xylenes, and is most preferably toluene.

As already indicated, raising the temperature to above 50°C (step c) causes solidification of catalyst particles. After precipitation the solid catalyst particle undergoes washings. Preferably, the solid catalyst particle is washed at least once up to 6 times, preferably at least twice, most preferably at least three times with a hydrocarbon, which preferably is selected from aromatic and aliphatic hydrocarbons, preferably with toluene, heptane or pentane, more preferably toluene, particularly with hot (e.g. 80 to 100°C) toluene, which might include a smaller or higher amount of $TiCl_4$ in it. The amount of $TiCl_4$ can vary from a few vol% to more than 50-vol%, such as from 5-vol% to 50-vol%, preferably from 5 to 15-vol%. It is also possible that at least one wash is done with 100-vol% $TiCl_4$. One or several further washes after aromatic and/ or $TiCl_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene. In addition, during the catalyst component preparation a reducing agent, which decreases the amount of

titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification. Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the catalyst component synthesis and can be added at any step (b) to (c), or during the washing step as described above. Preferably the reducing compound is added during the washing step, more preferably during the first washing step with hot toluene.

The Bi compound employed in this route is of the same type and amount as that described for the previous route. Also in this route the Bi compound can be introduced in any of the steps (a)-(d).

Preferably, the Bi compound is added in step (b) preferably dissolved or suspended in the liquid medium.

In a variation of the second preferred route, the Mg alkoxide solution in a $C_6$-$C_{10}$ aromatic liquid reaction medium prepared in (a), is first contacted with the electron donor or precursor thereof thereby obtaining a further solution; in step (b) the solution obtained in (a) is reacted with titanium tetrahalide at a temperature greater than 10°C and less than 60°C to produce an emulsion of a denser, $TiCl_4$/toluene-insoluble, oil dispersed phase having a Ti/Mg mol ratio 0.1 to 10 in an oil disperse phase having Ti/Mg mol ratio 10 to 100; agitating the emulsion, optionally in the presence of an emulsion stabilizer and or a turbulence minimizing agent, in order to maintain the droplets of said dispersed phase within an average size range of 5 to 200 $\mu$m.

The said disperse and dispersed phases are thus distinguishable from one another by the fact that the denser oil, if contacted with a solution of titanium tetrachloride in toluene, will not dissolve in it. A suitable solution for establishing this criterion would be one having a toluene mol ratio of 0.1 to 0.3. They are also distinguishable by the fact that the great preponderance of the Mg provided (as complex) for the reaction with the Ti compound is present in the dispersed phase, as revealed by comparison of the respective Ti/Mg mol ratios.

In effect, therefore, virtually the entirety of the reaction product of the Mg complex with the $TiCl_4$, which is the precursor of the ultimate catalyst component, becomes the dispersed phase, and proceeds through the further processing steps to the final dry particulate form. The disperse phase, still containing a useful quantity of Ti, can be reprocessed for recovery of that metal.

The production of a two-phase, rather than single-phase (as in the previously described variation) reaction product is encouraged by carrying out the Mg complex/Ti metal compound reaction at low temperature, specifically above 10°C but below 60°C, preferably between above 20°C and below 50°C. Since the two phases will naturally tend to separate into a lower, denser oil phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerisation. This morphology is preserved during the heating to solidify the particles, and of course throughout the final washing and drying steps.

A preferred electron donor used in this variation is an aromatic carboxylic acid ester, a particularly favoured ester being dioctyl phthalate. The donor may conveniently be formed in situ by reaction of an aromatic carboxylic acid chloride precursor with a $C_2$-$C_{16}$ alkanol and/or diol. The liquid reaction medium preferably comprises toluene.

Furthermore, emulsifying agents/emulsion stabilisers can be used additionally in a manner known in the art for facilitating the formation and/or stability of the emulsion. For the said purposes e.g. surfactants, as those above disclosed can be used.

In addition, improved results can be obtained if a turbulence minimizing agent (TMA) is added to the reaction mixture. By using said TMA, catalyst component particles can be obtained, said particles having very narrow size distribution.

Though the mechanism of action of said TMA is not fully understood, it is assumed that said TMA serves for a grain size limitation by reducing the turbulences in the emulsion during agitation, thus leading to a more uniform grain formation. Most probably, the mixing energy is better distributed into the emulsion. Further reasons might be seen in an interaction of the TMA with the surface of the grain, leading to a size limitation of the grain.

Preferably, the TMA is added to the reaction mixture when the emulsion is formed. The TMA has to be added to the reaction mixture in any case before solidification of the droplets of the dispersed phase starts in order to make sure that a quite uniform particle size distribution can be obtained.

Said TMA agent has to be inert under the reaction conditions and soluble in the reaction mixture under the reaction conditions, which means that preferably polymers without polar groups are preferred.

Accordingly, particularly preferred TMA is preferably selected from $\alpha$-olefin polymers having a high molecular weight of MW about 1- 40 $\times$ $10^6$, or mixtures thereof. Especially preferred are polymers of $\alpha$-olefin monomers with 6 to 20 carbon atoms, most preferable is polydecene.

In more detail, the turbulence minimizing agent is preferably selected from the group consisting of inert poly($C_6$-$C_{20}$)-olefines or mixtures thereof, and more preferably from polyoctene, polynonene, polydecene, polyundecene or polydodecene or mixtures thereof, having the molecular weight and general backbone structure as defined before. Usually, said turbulence minimizing agent can be added in any process step before particle formation starts, i.e. in any step before solidification of the emulsion, and is added to the emulsion in an amount of 1 to 1.000 ppm, preferably 5 to 100 ppm and more preferable 5 to 50 ppm, based on the total weight of the reaction mixture.

It has been found that the preferred Ti/Mg mol ratio of the denser oil is 1 to 5, preferably 2 to 4, and that of the disperse phase oil is 55 to 65. Generally, the ratio of the mol ratio Group 4 metal/Mg in the disperse phase oil to that in the denser oil is at least 10.

In step (c), solidification of the dispersed phase droplets by heating is suitably carried out at a temperature of 70-150°C, usually at 90-110°C.

The finally obtained catalyst component is desirably in the form of particles having generally an average size range of 5 to 200 $\mu$m, preferably 10 to 100, more preferably 20 to 50 $\mu$m.

Use of Bi compound and washings in this variation are carried out as described for the main second preferred route.

Independently from the way the Bi compound is added, the content of Bi in the final catalyst ranges from 0.5 to 40% more preferably from 0.5 to 35, and even more preferably from 0.5 to 20 or especially from 1 to 20%wt. In another embodiment the content of Bi ranges from 1 to 35, especially from 2 to 25%wt and in very particular embodiment from 2 to 20%wt. with respect to the total weight of catalyst.

In general the amount of Mg preferably ranges from 8 to 30% more preferably from 10 to 25%wt with respect to the total weight of solid catalyst component.

The amount of Ti can range from 0.5 to 5% and more preferably from 0.7 to 3%wt with respect to the total weight of solid catalyst component.

The catalyst component (A) according to the present disclosure which is obtained through the above described steps can be used as a solid or as a suspension.

The solid catalyst components (A) according to the present disclosure are converted into catalysts for the polymerization of olefins by reaction with (B) organoaluminum compounds.

Preferred organoaluminum compounds are the alkyl-Al compounds which are preferably selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$. In the catalyst system of the disclosure, the molar ratio of aluminum in component (B) to titanium in component (A) is from 5 to 1000, preferably from 100 to 800, and the molar ratio of silicon in component (C) to titanium in component (A) is from 2 to 100, preferably from 5 to 40.

When polymers having a very high isotactic index are to be produced, the use of an external donor compound is preferred. The external donor (C) can be of the same type or it can be different from the electron donor compound used in the preparation of the solid catalyst component (A).

A class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are the silicon compounds in which a is 1, b is 1, c is 2, at least one of $R^5$ and $R^6$ is selected from branched alkyl, alkenyl, alkylene, cycloalkyl or aryl groups with 3-10 carbon atoms optionally containing heteroatoms and $R^7$ is a $C_1$-$C_{10}$ alkyl group, in particular methyl. Examples of such preferred silicon compounds are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. Moreover, are also preferred the silicon compounds in which a is 0, c is 3, $R^6$ is a branched alkyl or cycloalkyl group, optionally containing heteroatoms, and $R^7$ is methyl. Examples of such preferred silicon compounds are cyclohexyltrimethoxysilane, t-butyltrimethoxysilane and thexyltrimethoxysilane.

The electron donor compound (c) is used in such an amount to give a molar ratio between the organoaluminum compound and said electron donor compound (c) of from 0.1 to 500, preferably from 1 to 300 and more preferably from 3 to 100. As previously indicated, when used in the (co)polymerization of olefins, and in particular of propylene, the catalysts of the disclosure allow to obtain, very high yields and polymers endowed with a tendentially broad MWD.

As mentioned above, these catalysts can be used in the processes for the polymerization of olefins $CH_2$=CHR, in which R is hydrogen or a hydrocarbyl radical with 1-12 carbon atoms. The preferred alpha-olefins to be (co)polymerized are ethylene, propylene, butene-1, 4-methyl-1-pentene and hexene-1. In particular, the above described catalysts have been used in the (co)polymerization of propylene and ethylene to prepare different kinds of products.It is apparent hat by using the catalyst prepared according to the specific preparation procedure, it is possible to obtain higher activities with respect to those obtainable by the catalysts including the same ingredients (Mg. Ti, Cl, Bi) but prepared according

to different process steps. In particular, the catalysts of the present disclosure are able to reach activity over 140Kg/gcat and in particular ranging from 150 to 190 kg/gcat..

Any kind of polymerization process can be used with the catalysts of the disclosure that are very versatile. The polymerization can be carried out for example in slurry using as diluent an inert hydrocarbon solvent, or in bulk using the liquid monomer (for example propylene) as a reaction medium. Moreover, it is possible to carry out the polymerization process in gas-phase operating in one or more fluidized or mechanically agitated bed reactors.

The catalyst of the present disclosure can be used as such in the polymerization process by introducing it directly into the reactor. In the alternative, the catalyst can be pre-polymerized before being introduced into the first polymerization reactor. The term pre-polymerized as used in the art, means a catalyst which has been subject to a polymerization step at a low conversion degree. According to the present disclosure a catalyst is considered to be pre-polymerized when the amount the polymer produced is from about 0.1 up to about 1000 g per gram of solid catalyst component.

The pre-polymerization can be carried out with the alpha olefins selected from the same group of olefins disclosed before. In particular, it is especially preferred pre-polymerizing ethylene or mixtures thereof with one or more $\alpha$-olefins in an amount up to 20% by mole. Preferably, the conversion of the pre-polymerized catalyst component is from about 0.2 g up to about 500 g per gram of solid catalyst component.

The pre-polymerization step can be carried out at temperatures from 0 to 80°C preferably from 5 to 50°C in liquid or gas-phase. The pre-polymerization step can be performed in-line as a part of a continuous polymerization process or separately in a batch process. The batch pre-polymerization of the catalyst of the disclosure with ethylene in order to produce an amount of polymer ranging from 0.5 to 20 g per gram of catalyst component is particularly preferred.

The polymerization can be carried out at temperature of from 20 to 120°C, preferably of from 40 to 80°C. When the polymerization is carried out in gas-phase the operating pressure can range between 0.5 and 10 MPa, preferably between 1 and 5 MPa. In the bulk polymerization the operating pressure can range between 1 and 6 MPa preferably between 1.5 and 4 MPa. Hydrogen or other compounds capable to act as chain transfer agents can be used to control the molecular weight of polymer.

The following examples are given in order to better illustrate the disclosure without limiting it.

## EXAMPLES

The following examples are given to better illustrate the invention without limiting it.

## CHARACTERIZATIONS

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting 0.1÷0.3 grams of catalyst and 2 grams of lithium metaborate/tetraborate 1/1 mixture. After addition of some drops of KI solution, the sample was completely burned. The residue was collected with a 5% v/v HNOs solution and then analyzed via ICP at the following wavelengths: Magnesium, 279.08 nm; Titanium, 368.52 nm.

### Determination of Bi

The determination of Bi content in the solid catalyst component has been carried out via inductively coupled plasma emission spectroscopy on "I.C.P Spectrometer ARL Accuris". The sample was prepared by analytically weighting in a 200 milliliters volumetric flask 0.1-0.3 grams of catalyst. After slow addition of both ca. 20 milliliters of $H_2SO_4$ 95-98% and ca. 50 milliliters of distilled water, the sample undergoes a digestion for 12 hours. Then the volumetric flask is diluted to the mark with deionized water. The resulting solution is directly analyzed via ICP at the following wavelength: bismuth, 223.06 nm.

### Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

**Determination of X.I.**

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

**Molecular weight distribution (Mw/Mn)**

Molecular Weight and Molecular Weight Distribution (MWD) were measured by way of Gel Permeation Chromatography (GPC) in 1,2,4-trichlorobenzene (TCB). Molecular weight parameters ($\overline{M}_n$, $\overline{M}_w$, $\overline{M}_z$) and molecular weight distributions for the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 × 7.5 mm and their particle size 13 $\mu$m. The mobile phase flow rate was kept at 1.0 mL/min. The measurements were carried out at 150°C. Solution concentrations were 2.0 mg/mL (at 150°C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third order polynomial fit was used for interpolating the experimental data and obtain the relevant calibration curve. Data acquisition and processing was done by using Empower 3 (Waters).

The Mark-Houwink relationship was used to determine the molecular weight distribution and the relevant average molecular weights: the K values were $K_{PS}$ = 1.21 × $10^{-4}$ dL/g and $K_{PP}$ = 1.90 × $10^{-4}$ dL/g for polystyrene (PS) and polypropylene (PP) respectively, while the Mark-Houwink exponents $\alpha$= 0.706 for PS and $\alpha$= 0.725 for PP were used.

**Melt flow rate (MIL)**

The melt flow rate (MIL) of the polymer was determined according to ISO 1133 (230°C, 2.16 Kg).

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\delta\delta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove $^{1}$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

## General procedure for the preparation oe Propylene/ethylene copolymers

A 4-liter steel autoclave equipped with a stirrer, pressure gauge, thermometer, catalyst feeding system, monomer feeding lines and thermostating jacket, was purged with nitrogen flow at 70°C for one hour. Then, at 30°C under propylene flow (0.5 bar), a suspension containing 75 ml of anhydrous hexane, 0.76 g of $AlEt_3$, 3.3 mmol of diclopentyldimethoxysilane (D donor) and from 0.004to 0.010 g of solid catalyst component, previously precontacted for 5 minutes, was charged. The autoclave was closed; subsequently hydrogen was added to target the desired MIL, as reported in Table 1. Then, under stirring, 1.2 kg of liquid propylene together with the required amount of ethylene (4 g) was fed during the raising of temperature from 30 up to 70°C. The temperature was raised to 70°C in about 10-15 minutes and the polymerization was carried out at this temperature for two hours and ethylene was fed during the polymerization in order to keep the pressure constant. At the end of the polymerization, the non-reacted monomers were removed; the polymer was recovered and dried at 70°C under vacuum for three hours. Then the polymer was weighed and characterized.

## Example 1

A catalyst precursor of formula $Mg_3Ti(OEt)_8Cl_2$ was prepared following the recipe described in US5,077,357 (illustrative embodiment II).

Into a 500 ml round bottom flask, equipped with mechanical stirrer, cooler and thermometer, 105 ml of $TiCl_4$ and 105 ml of chlorobenzene were introduced at room temperature under nitrogen atmosphere. After cooling to 0°C, while stirring, $BiCl_3$ in a powder form and in an amount such as to have a Mg/Bi molar ratio of 20, diisobutylphthalate (DIBP) in an amount such as to have a Mg/DIBP molar ratio of 10, and 10.3 g of a Mg based precursor (prepared as described above) were sequentially added into the flask. The temperature was raised to 100°C and maintained for 1 hour. Thereafter, stirring was stopped, the solid product was allowed to settle, and the supernatant liquid was siphoned off at 100°C. After the supernatant was removed, additional fresh $TiCl_4$ and chlorobenzene was added at room temperature. The mixture was then heated at 120°C and kept at this temperature for 60 minutes. Stirring was stopped again, the solid was allowed to settle and the supernatant liquid was siphoned off at 100°C. The solid was washed with anhydrous heptane four times in temperature gradient down to 90°C and one time at 25°C. The obtained solid was then dried under vacuum and analyzed.

The so obtained catalyst component was used in the copolymerization of propylene with ethylene carried out according to the general procedure. The results are reported in Table 1.

## Comparative Example C1

The procedure described in Example 1 was repeated with the exception that $BiCl_3$ was not used. The so obtained catalyst component was used in the copolymerization of propylene with ethylene carried out according to the general procedure. The results are reported in Table 1.

## Comparative Example C2

DIBP based catalyst prepared in accordance with the method described in WO2017/042058 (examples 1-12) employing $BiCl_3$ dissolved in $TiCl_4$.

## Comparative Example C3

DIBP based catalyst prepared as in C2 without using $BiCl_3$.

**Table 1**

| | Solid Catalyst Component | | | | | | | |
|---|---|---|---|---|---|---|---|---|
| | Mg % wt. | Ti % wt. | Bi % wt. | DIBP % wt. | C2 %wt | Mileage Kg/g | XI %wt. | MIL g/10' |
| Ex. 1 | 20.9 | 1.6 | 1.4 | 6.8 | 4.1 | 184 | 94.6 | 5.4 |
| Ex. 2 | | | | | 3.8 | 170 | 95.2 | 5.1 |
| C1 | 19.3 | 3.0 | - | 11.1 | 3.8 | 108 | 93.2 | 7.7 |
| C2 | 18.7 | 2 | 2 | 13.0 | 3.4 | 130 | 95.6 | 4.9 |
| C3 | 18.7 | 2.7 | | 11.3 | 3.2 | 120 | 94.7 | 4.2 |
| DIBP = diisobutyl phthalate | | | | | | | | |

## Claims

1. A solid catalyst component for the (co)polymerization of olefins comprising titanium, magnesium, halogen, bismuth and an electron donor compound and is obtained by a process comprising the following steps:

   (a) dissolving a $Mg(OR)_2$ compound where R groups, equal or different to each other, are $C_1$-$C_{15}$ hydrocarbon groups optionally containing a heteroatom selected from O, N and halogen, in an organic liquid medium in order to have a liquid mixture;
   (b) contacting the above mixture (a) with $TiCl_4$ obtaining a liquid mixture not containing solid phase,
   (c) subjecting the liquid mixture (b) to a temperature of at least 50°C thereby forming solid catalyst particles,
   said process being **characterized by** the fact that (i) a Bi compound and (ii) a bidentate electron donor compound is present in one or more of steps (a) to (c) and/or contacted with the solid catalyst particles obtained from (c).

2. The catalyst component according to claim 1 **characterized in that** the Bi compound can be selected from Bi halides, Bi carbonate, Bi carboxylates, Bi nitrate, Bi oxide, Bi sulphate and Bi sulfide.

3. The catalyst component according to claim 2 **characterized in that** the Bi compound is Bi trichloride or a Bi decanoate.

4. The catalyst component according to claim 1 **characterized in that** the Bi compound is used in amounts ranging from 0.005 to 0.2 mole per mole of Mg.

5. The catalyst component according to claim 1 **characterized in that** the $Mg(OR)_2$ compound is a magnesium alkoxide in which R is a simple $C_1$-$C_{15}$ alkyl group or has the structure of an ether group -ROR where R is a $C_1$-$C_{15}$ alkyl group as well.

6. The catalyst component according to any of the preceding claims in which claim 1 in which in step (b) a liquid mixture is prepared by reacting the Mg alkoxide with $TiCl_4$ and with a titanium alkoxide, a phenolic compound and an alkanol in an inert liquid diluent.

7. The catalyst component according to claim 6 **characterized in that** the alkoxy groups of the Mg alkoxide, alkanol and those of the Ti alkoxides, independently have up to 4 carbon atoms inclusive.

8. The catalyst component according to claim 8 in which the reaction step (b) is carried out according to the following scheme carried out at a temperature ranging from 30 to 120°C:

   $$3Mg(OEt)_2 + x\ Ti(OEt)_4 + y\ TiCl_4 + z\ o\text{-cresol} + n\ EtOH$$

   wherein y is more than 0.1 but less than 0.8, (x+y) is more than 0.2 but less than 3, z is more than 0.05 but less than 3, and n is more than 0.5 but less than 9

9. The catalyst component according to claim 8 **characterized in that** step (c) comprises raising the temperature to at least 50°C in order to remove the alkanol causing solidification of particles.

**10.** The catalyst component according to claim 1 **characterized in that** the bidentate electron donor is selected from the group consisting of ethers, amines, silanes, carbamates, ketones, esters of aliphatic acids, alkyl and aryl esters of optionally substituted aromatic polycarboxylic acids, diol derivatives containing ester, carbamates, carbonates, amides groups or mixtures thereof.

**11.** The catalyst component according to anyone of claims 1-10 in which, in a further step (d) the bidentate electron donor and optionally, a tetravalent titanium halide, are contacted with the solidified particles obtained from step (c).

**12.** The catalyst component according to claim 1-5 and 10 **characterized in** step (b) the Mg alkoxide solution is mixed with $TiCl_4$ at a temperature of -20°C to 30°C and in the presence of a surfactant and in the successive step (c), precipitation of the solid catalyst components is obtained by slowly raising the temperature to at least 50 °C.

**13.** The catalyst component according to claim 12 in which the bidentate electron donor is added to the Mg alkoxide solution prepared in step (a).

**14.** The catalyst component according to claim 1-5 and 11 **characterized in that** the Mg alkoxide solution in a $C_6$-$C_{10}$ aromatic liquid reaction medium prepared in (a), is first contacted with the electron donor or precursor thereof thereby obtaining a further solution; in step (b) the solution obtained in (a) is reacted with titanium tetrahalide at a temperature greater than 10°C and less than 60°C, in the presence of an emulsion stabilizer, to produce an emulsion of a denser, $TiCl_4$/toluene-insoluble, oil dispersed phase having a Ti/Mg mol ratio 0.1 to 10 in an oil disperse phase having Ti/Mg mol ratio 10 to 100.

**15.** The catalyst component according to claim 14 in which in step (c), solidification of the dispersed phase droplets by heating is suitably carried out at a temperature of 70-150°C.

## Patentansprüche

**1.** Feste Katalysatorkomponente zur (Co)polymerisation von Olefinen, welche Titan, Magnesium, Halogen, Bismut und eine Elektronendonorverbindung umfasst und nach einem Verfahren erhalten wird, das die folgenden Schritte umfasst:

(a) Lösen einer Verbindung $Mg(OR)_2$, wobei die Gruppen R, die gleich oder voneinander verschieden sind, Ci-Cis-Kohlenwasserstoffgruppen sind, die gegebenenfalls ein Heteroatom ausgewählt aus O, N und Halogen enthalten, in einem organischen flüssigen Medium, damit eine flüssige Mischung vorliegt;
(b) Kontaktieren der obigen Mischung (a) mit $TiCl_4$, wodurch eine flüssige Mischung erhalten wird, die keine feste Phase enthält,
(c) Aussetzen der flüssigen Mischung (b) einer Temperatur von mindestens 50 °C, wodurch feste Katalysatorpartikel gebildet werden, wobei das Verfahren durch die Tatsache gekennzeichnet ist, dass (i) eine Bi-Verbindung und (ii) eine zweizähnige Elektronendonorverbindung in einem oder mehreren der Schritte (a) bis (c) vorhanden ist und/oder mit den aus (c) erhaltenen festen Katalysatorpartikel kontaktiert werden.

**2.** Katalysatorkomponente nach Anspruch 1, **dadurch gekennzeichnet, dass** die Bi-Verbindung ausgewählt sein kann aus Bi-Halogeniden, Bi-Carbonat, Bi-Carboxylaten, Bi-Nitrat, Bi-Oxid, Bi-Sulfat und Bi-Sulfid.

**3.** Katalysatorkomponente nach Anspruch 2, **dadurch gekennzeichnet, dass** die Bi-Verbindung Bi-Trichlorid oder ein Bi-Decanoat ist.

**4.** Katalysatorkomponente nach Anspruch 1, **dadurch gekennzeichnet, dass** die Bi-Verbindung in Mengen im Bereich von 0,005 bis 0,2 Mol pro Mol Mg verwendet wird.

**5.** Katalysatorkomponente nach Anspruch 1, **dadurch gekennzeichnet, dass** die Verbindung $Mg(OR)_2$ ein Magnesiumalkoxid ist, bei dem R eine einfache Ci-Cis-Alkylgruppe ist oder die Struktur einer Ethergruppe -ROR hat, wobei R ebenso eine Ci-Cis-Alkylgruppe ist.

**6.** Katalysatorkomponente nach einem der vorhergehenden Ansprüche, wobei in Anspruch 1 in Schritt (b) eine flüssige Mischung hergestellt wird, indem das Mg-Alkoxid mit $TiCl_4$ und mit einem Titanalkoxid, einer phenolischen Verbindung und einem Alkanol in einem inerten flüssigen Verdünnungsmittel umgesetzt wird.

7. Katalysatorkomponente nach Anspruch 6, **dadurch gekennzeichnet, dass** die Alkoxygruppen des Mg-Alkoxids, des Alkanols und jene der Ti-Alkoxide unabhängig bis zu 4 Kohlenstoffatome einschließlich aufweisen.

8. Katalysatorkomponente nach Anspruch 8, wobei der Reaktionsschritt (b) gemäß dem folgenden Schema durchgeführt wird, das bei einer Temperatur im Bereich von 30 bis 120 °C durchgeführt wird:

$$3\ Mg(OEt)_2 + x\ Ti(OEt)_4 + y\ TiCl_4 + z\ \text{o-Cresol} + n\ EtOH$$

wobei y mehr als 0,1, jedoch weniger als 0,8 ist, (x+y) mehr als 0,2, jedoch weniger als 3 ist, z mehr als 0,05, jedoch weniger als 3 ist, und n mehr als 0,5, jedoch weniger als 9 ist.

9. Katalysatorkomponente nach Anspruch 8, **dadurch gekennzeichnet, dass** Schritt (c) Anheben der Temperatur auf mindestens 50 °C umfasst, um das Alkanol zu entfernen, wodurch Verfestigung der Partikel bewirkt wird.

10. Katalysatorkomponente nach Anspruch 1, **dadurch gekennzeichnet, dass** der zweizähnige Elektronendonor ausgewählt ist aus der Gruppe bestehend aus Ethern, Aminen, Silanen, Carbamaten, Ketonen, Estern von aliphatischen Säuren, Alkyl- und Arylestern von gegebenenfalls substituierten aromatischen Polycarbonsäuren, Diolderivaten, enthaltend Ester, Carbamate, Carbonate, Amidgruppen oder Mischungen davon.

11. Katalysatorkomponente nach einem der Ansprüche 1 bis 10, wobei in einem weiteren Schritt (d) der zweizähnige Elektronendonor und gegebenenfalls ein vierwertiges Titanhalogenid mit den aus Schritt (c) erhaltenen verfestigten Partikeln kontaktiert werden.

12. Katalysatorkomponente nach Anspruch 1 bis 5 und 10, **dadurch gekennzeichnet, dass** in Schritt (b) die Mg-Alkoxidlösung bei einer Temperatur von -20 °C bis 30 °C und in Gegenwart eines Tensids mit $TiCl_4$ gemischt wird, und in dem nachfolgenden Schritt (c) Ausfällung der festen Katalysatorkomponenten erhalten wird, indem die Temperatur langsam auf mindestens 50 °C angehoben wird.

13. Katalysatorkomponente nach Anspruch 12, wobei der zweizähnige Elektronendonor der in Schritt (a) hergestellten Mg-Alkoxidlösung zugegeben wird.

14. Katalysatorkomponente nach Anspruch 1 bis 5 und 11, **dadurch gekennzeichnet, dass** die Mg-Alkoxidlösung in einem in (a) hergestellten aromatischen flüssigen $C_6$-$C_{10}$-Reaktionsmedium zuerst mit dem Elektronendonor oder Vorläufer davon kontaktiert wird, wodurch eine weitere Lösung erhalten wird; die in (a) erhaltene Lösung in Schritt (b) bei einer Temperatur von mehr als 10 °C und weniger als 60 °C in Gegenwart eines Emulsionsstabilisators mit Titantetrahalogenid umgesetzt wird, um eine Emulsion einer dichteren, $TiCl_4$/Toluol-unlöslichen, öldispergierten Phase mit einem Ti/Mg-Molverhältnis von 0,1 bis 10 in einer Öldispersionsphase mit einem Ti/Mg-Molverhältnis von 10 bis 100 zu produzieren.

15. Katalysatorkomponente nach Anspruch 14, wobei in Schritt (c) die Verfestigung der Tröpfchen der dispergierten Phase durch Erwärmen geeigneterweise bei einer Temperatur von 70 bis 150 °C durchgeführt wird.

## Revendications

1. Constituant catalytique solide pour la (co)polymérisation d'oléfines comprenant du titane, du magnésium, de l'halogène, du bismuth et un composé donneur d'électrons et obtenu par un procédé comprenant les étapes suivantes :

(a) dissolution d'un composé $Mg(OR)_2$ où les groupes R, identiques ou différents l'un de l'autre, sont des groupes hydrocarbonés en $C_1$-$C_{15}$ contenant éventuellement un hétéroatome choisi parmi O, N et halogène, dans un milieu liquide organique afin d'avoir un mélange liquide ;
(b) mise en contact du mélange (a) ci-dessus avec du $TiCl_4$, ce qui permet d'obtenir un mélange liquide ne contenant pas de phase solide ;
(c) soumission du mélange liquide (b) à une température d'au moins 50 °C, formant ainsi des particules catalytiques solides, ledit procédé étant **caractérisé par le fait que** (i) un composé de Bi et (ii) un composé donneur d'électrons bidentate est présent dans une ou plusieurs des étapes (a) à (c) et/ou mis en contact avec les particules catalytiques solides obtenues à partir de (c).

**2.** Constituant catalytique selon la revendication 1, **caractérisé en ce que** le composé de Bi peut être choisi parmi les halogénures de Bi, le carbonate de Bi, les carboxylates de Bi, le nitrate de Bi, l'oxyde de Bi, le sulfate de Bi et le sulfure de Bi.

**3.** Constituant catalytique selon la revendication 2, **caractérisé en ce que** le composé de Bi est le trichlorure de Bi ou un décanoate de Bi.

**4.** Constituant catalytique selon la revendication 1, **caractérisé en ce que** le composé de Bi est utilisé en des quantités situées dans la plage de 0,005 à 0,2 mole par mole de Mg.

**5.** Constituant catalytique selon la revendication 1, **caractérisé en ce que** le composé $Mg(OR)_2$ est un alcoxyde de magnésium dans lequel R représente un groupe alkyle en $C_1$-$C_{15}$ simple ou présente la structure d'un groupe éther -ROR où R représente également un groupe alkyle en $C_1$-$C_{15}$.

**6.** Constituant catalytique selon l'une quelconque des revendications précédentes, dans lequel, dans la revendication 1, dans l'étape (b), un mélange liquide est préparé par réaction de l'alcoxyde de Mg avec du $TiCl_4$ et avec un alcoxyde de titane, un composé phénolique et un alcanol dans un diluant liquide inerte.

**7.** Constituant catalytique selon la revendication 6, **caractérisé en ce que** les groupes alcoxy de l'alcoxyde de Mg, de l'alcanol et ceux des alcoxydes de Ti présentent indépendamment jusqu'à 4 atomes de carbone, valeur extrême incluse.

**8.** Constituant catalytique selon la revendication 8, dans lequel l'étape de réaction (b) est effectuée selon le schéma suivant, effectué à une température située dans la plage de 30 à 120 °C :

$$3\ Mg(OEt)_2 + x\ Ti(OEt)_4 + y\ TiCl_4 + z\ \text{o-crésol} + n\ EtOH$$

y étant supérieur à 0,1 mais inférieur à 0,8, (x + y) étant supérieur à 0,2 mais inférieur à 3, z étant supérieur à 0,05 mais inférieur à 3 et n étant supérieur à 0,5 mais inférieur à 9.

**9.** Constituant catalytique selon la revendication 8, **caractérisé en ce que** l'étape (c) comprend l'élévation de la température à au moins 50 °C afin d'éliminer l'alcanol, ce qui provoque la solidification de particules.

**10.** Constituant catalytique selon la revendication 1, **caractérisé en ce que** le donneur d'électrons bidentate est choisi dans le groupe constitué par les éthers, les amines, les silanes, les carbamates, les cétones, les esters d'acides aliphatiques, les esters d'alkyle et d'aryle de poly(acides carboxyliques) aromatiques éventuellement substitués, les dérivés de diol contenant ester, des carbamates, des carbonates, des groupes amide ou des mélanges de ceux-ci.

**11.** Constituant catalytique selon l'une quelconque des revendications 1 à 10, dans lequel, dans une autre étape (d), le donneur d'électrons bidentate et éventuellement un halogénure de titane tétravalent sont mis en contact avec les particules solidifiées obtenues à partir de l'étape (c).

**12.** Constituant catalytique selon les revendications 1 à 5 et 10, **caractérisé en ce que**, dans l'étape (b), la solution d'alcoxyde de Mg est mélangée avec du $TiCl_4$ à une température de -20 C à 30 °C et en présence d'un tensioactif et dans l'étape successive (c), la précipitation des constituants catalytiques solides est obtenue par augmentation lente de la température jusqu'à au moins 50 °C.

**13.** Constituant catalytique selon la revendication 12, dans lequel le donneur d'électrons bidentate est ajouté à la solution d'alcoxyde de Mg préparée dans l'étape (a).

**14.** Constituant catalytique selon les revendications 1 à 5 et 11, **caractérisé en ce que** la solution d'alcoxyde de Mg dans un milieu réactionnel liquide aromatique en $C_6$-$C_{10}$ préparé dans (a) est d'abord mise en contact avec le donneur d'électrons ou le précurseur de celui-ci, ce qui permet d'obtenir une autre solution ; dans l'étape (b), la solution obtenue dans (a) est mise à réagir avec du tétrahalogénure de titane à une température supérieure à 10 °C et inférieure à 60 °C, en présence d'un stabilisant d'émulsion, pour produire une émulsion d'une phase huileuse dispersée plus dense, insoluble dans le $TiCl_4$/toluène, présentant un rapport molaire Ti/Mg de 0,1 à 10 dans une phase huileuse dispersée présentant un rapport molaire Ti/Mg de 10 à 100.

**15.** Constituant catalytique selon la revendication 14, dans lequel, dans l'étape (c), la solidification des gouttelettes de phase dispersée par chauffage est effectuée de manière appropriée à une température de 70 à 150 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 713886 A
- EP 856013 A
- US 5077357 A
- WO 2011061134 A
- WO 2010078494 A
- US 7388061 B
- WO 2017042058 A


### Non-patent literature cited in the description


- Nomenclature of Inorganic Chemistry. IUPAC, 1989
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150